Europäisches Patentamt

(19) European Patent Office

Office européen des brevets

(11) Publication number: **0 058 309**
**B1**

(12) **EUROPEAN PATENT SPECIFICATION**

(45) Date of publication of patent specification: **15.01.86**

(21) Application number: **82100411.6**

(22) Date of filing: **21.01.82**

(51) Int. Cl.⁴: **F 16 B 17/00, B 60 R 22/34**

(54) **Integral plastic fastener.**

(30) Priority: **12.02.81 US 233740**
**12.02.81 US 233741**

(43) Date of publication of application:
**25.08.82 Bulletin 82/34**

(45) Publication of the grant of the patent:
**15.01.86 Bulletin 86/03**

(84) Designated Contracting States:
**DE FR GB IT SE**

(56) References cited:
**DE-A-2 321 800**
**FR-A-2 006 328**
**US-A-2 765 951**
**US-A-4 204 652**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Cachia, Joseph M.**
**3017 Huntington Drive**
**Tallahassee Florida 32302 (US)**
Inventor: **Lentz, James M.**
**5600 Colonial Circle**
**Knoxville Tennesse 37918 (US)**
Inventor: **Lynch, Dan M.**
**9004 Mattox Lane**
**Tennessee 37922 (US)**

(74) Representative: **Seiffert, Klaus et al**
**Gustav Freytag-Strasse 25 Postfach 6145**
**D-6200 Wiesbaden 1 (DE)**

Courier Press, Leamington Spa, England.

## Description

### Background of the Invention
#### *Field of the Invention*
This invention relates to integral plastic fasteners, especially for plastic covers to be attached to seat belt retractors.

### Description of the Prior Art
Devices such as covers for rewind springs and for tension relieving mechanisms have been attached to seat belt retractors by a variety of means. Such means include the use of integral plastic fasteners. For example, plastic push pin-type fasteners have been molded into retractor spring covers. In addition, split pin-type fasteners have been suggested, as disclosed in US—A—4,204,652 to Cislak et al., for example. Furthermore, integral plastic fasteners for retractor spring covers have been utilized which include outwardly tapered legs.

The prior fasteners, although generally acceptable, are either difficult (and hence relatively expensive) to mold or have extraction strengths which are only moderately high.

FR—A—2 006 328 discloses a molded plastic article adapted to be attached by an integrally molded plastic fastener to a cooperating part having an aperture for receiving said fastener,

said plastic article having a first surface an opposite second surface and a solid central portion;

said fastener comprising an integral lug extending from said first surface outwardly and terminating in a distal end, the portion of said first surface which intersects said lug defining a shoulder adapted to surround said aperture, the central portion of said lug having an axial hollow core, said core being surrounded by a solid wall portion.

This prior art article is based in its construction on the cooperation of two plastic parts male and female. Thus the known article needs two parts at least to fasten a first portion to a second portion. By assembling that structure the male element is introduced by force into the aperture of a corresponding aperture in the female element.

It would be desirable to provide a molded plastic article adapted to be attached by a fastener as stated above, which fastener is simpler in construction and easier to mold and yet offers high extraction strengths.

### Summary of the Invention
In accordance with this invention, there is provided a molded plastic article, which is characterized by the hollow core extending from a first end adjacent the distal end to a second end which is located interiorly of the first surface so as at least to extend into the solid central portion of the plastic article, the length of the core being greater than the length of the lug; and the outside lateral dimension of the lug being substantially the same adjacent the first surface and adjacent the distal end.

Preferably, the cooperating part is a seat belt retractor and the molded plastic article is a cover for a part of the retractor. Also, preferably the inner walls of the core taper slightly inwardly from the distal end to the second end, and the second end terminates within the central portion of the plastic article. In addition, it is preferred that the core has a generally circular shape as does the outer wall of the lug.

It has also been found that in situations in which there is high interference fit, the fastener preferably has a substantially square or triangular core in order to ensure that the fastener fully seats against the apertured walls of the retaining device. Furthermore, such fasteners are not damaged by high interference fit and thus can accommodate greater production variances. Extraction forces are comparable with the cylindrical core fasteners.

The integral fastener of this invention is easy to mold and exhibits very good extraction strength, even after exposure to heat and humidity. In addition, the insertion force is reduced over prior art fasteners and the extraction strength is retained over a wide range of interference fits. Thus, the fastener does not require high tolerances. The lug is retained within the aperture solely by an interference fit due to compression of the plastic material.

### Brief Description of the Drawings
Fig. 1 is an enlarged cross-section view of the integral plastic fastener of this invention.

Fig. 2 is an end view of the fastener of Fig. 1 taken along line 2—2.

Fig. 2A is an end view similar to Fig. 2 wherein the cross-section of the core is square.

Fig. 2B is an end view similar to Fig. 2 wherein the cross-section of the core is triangular.

Fig. 3 is a perspective view of a seat belt retractor frame and spring cover mounted thereon by the fastener of this invention.

Fig. 4 is an enlarged cross-sectional view of a section of Fig. 3 showing the fastener in place.

Fig. 5 is a view of a spring cover of Fig. 3.

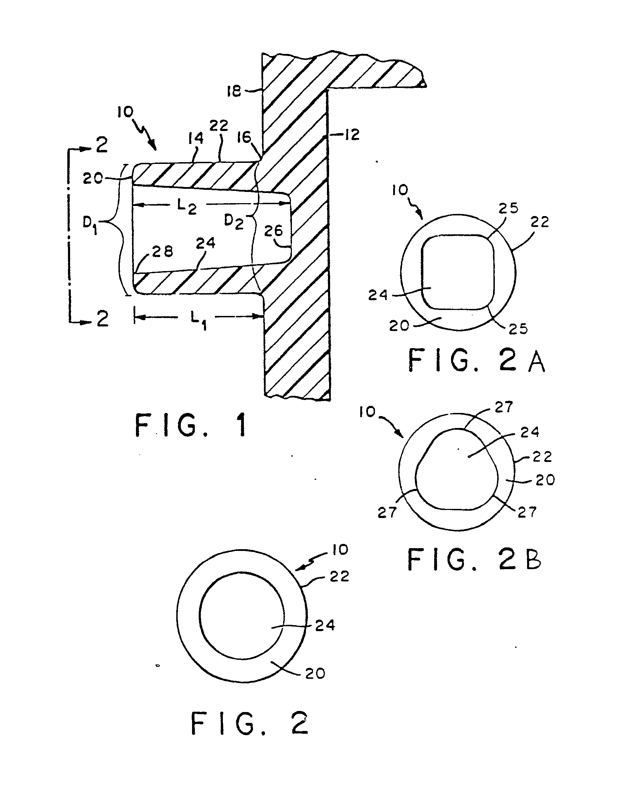

### Description of the Preferred Embodiments
With reference to the drawings, there is shown in Fig. 1 a plastic fastener generally indicated at 10 integrally attached to a molded plastic article 12. A variety of plastic materials may be employed that possess the requisite flexibility, strength, ease of molding and cost benefits; the presently preferred material is nylon. Fastener 10 includes an integral lug 14 that commences at a first end 16 that intersects a first surface 18 of plastic article 12 substantially at right angles and extends outwardly therefrom, terminating in a distal end 20. Outer wall 22 extending between the ends of lug 14 preferably has a circular cross-section and a smooth surface for ease of insertion. The intersection of outer wall 22 and distal end 20 preferably approximates a right angle, but may be slightly rounded for ease in molding.

A hollow core 24 is provided approximately at the center of lug 14 and extends from the distal end 20 of lug 14 towards plastic article 12. Core 24 terminates beyond first surface 18 and preferably in the interior of plastic article 12 at end 26. Alternatively, core 24 may extend completely through plastic article 12, but preferably end 26 is closed to avoid problems with dust, etc. The shape of inner wall 28 which defines core 24 is circular at least adjacent end 20. Wall 28 preferably is slightly tapered inwardly from end 20 towards end 26, e.g., a few degrees. However, the diameter of outer wall 22 at end 20 ($D_1$) is substantially the same as the diameter at end 16 ($D_2$) since outer wall 22 is not tapered. It can be seen that the length of lug 14 ($L_1$) is less than the length of core 24 ($L_2$). As pointed out above, lug 24 is flexible and is formed of a compressible material.

In Fig. 2A, there is shown a fastener in which core 24 is substantially square adjacent end 20. Although edges 25 of inner wall 28 may be formed at right angles, they are preferably slightly curved for ease in molding.

In the embodiment of Fig. 2B, the shape of inner wall 28 is substantially triangular. As shown, the intersecting sides of the triangle are preferably slightly rounded at 27 to provide a generally trilobal cross-section for ease in molding.

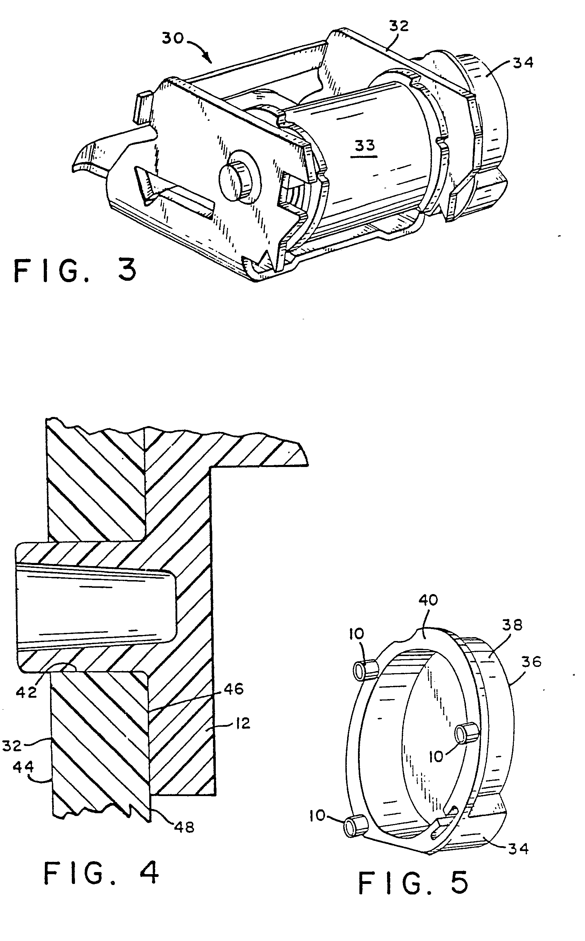

Fig. 3 illustrates one preferred embodiment of this invention wherein the plastic article is a cover for a part of a seat belt retractor. Retractor 30 includes a frame 32 to which a spool 33 of seat belt webbing is attached. As is conventional in such retractors, a rewind spring (not shown) is employed to bias the seat belt webbing towards the retractor. The rewind spring is typically located on the exterior of frame 32 and is contained within a spring cover 34. Cover 34 has a generally circular shaped flat bottom wall 36 and a side wall 38 which extends outwardly from bottom wall 36 and terminates in a circular mounting flange 40 which extends radially from side wall 38. Flange 40 is provided with a plurality of integral fasteners 10 in the form as shown in Fig. 1. Retractor frame 32 is provided with corresponding round apertures (aperture 42 in Fig. 4) for engagement by lugs 14. The diameter of the apertures is chosen to be somewhat less than the diameter $D_1$ of lug 14 so that the lugs are held by an interference fit within the apertures and are held under compression.

As shown in Fig. 4, it can be seen that end 28 of lug 14 extends into aperture 42 and terminates beyond inner wall 44 of frame 32; however, end 28 may alternatively be flush or inset with wall 44. The lower wall 46 of flange 42 adjacent ends 16 of lug 14 (which corresponds to surface 18 in Fig. 1) forms a shoulder around lug 14 and is abutted against outer wall 48 of frame 32.

An example of the dimensions of lug 14 are as follows: $L_1 = 3.8$ mm, $L_2 = 4.3$ mm, $D_1 = 4.3$ mm, $D_2 = 4.3$ mm, diameter of core $24 = 2.8$ mm, and the thickness of flange $40 = 1.2$ mm. The degree of taper of the core is 3°. A typical diameter of aperture 42 is 4.04 mm in a wall having a thickness of 3 mm. A typical width of a square core is 2.7 mm and a typical height of a triangular core is 3 mm.

Although in the above description the plastic article has been referred to as a cover for a retractor rewind spring, the cover may also be a cover for a tension-relieving device, for a gear structure or other plastic article.

The fastener of this invention exhibits many advantages over the prior art.

The fastener of this invention exhibits a higher extraction force than prior art fasteners, such as on the order of about 50% higher. At the same time, the insertion force is lower, such as on the order of about 40% lower. Thus, articles incorporating the fasteners are easier to assemble. The higher extraction force is retained over a considerable range of interference fit, such as about 0.004 to 0.024 inches (0.1 to 0.6 mm). As a result, the dimensions of the fastener, particularly the outside diameter and wall thickness, do not require close tolerances, thereby reducing manufacturing costs. In addition, the extraction force is not adversely affected by heat and humidity as is the prior art fastener; in fact, the extraction force of the present fastener is increased under such conditions. Furthermore, the extraction force of the fastener is not substantially adversely effected by repeated insertions and extractions. For example, on the order of 90% of the extraction force is retained after two insertion-extraction cycles. Thus, the parts incorporating the present fastener can be reworked, increasing the salvage rate and further reducing manufacturing costs.

The integral fasteners of square or triangular cross-section have been found to fully seat at high interference fits. For example, at an interference fit of 0.029 in. (0.74 mm), both the square and triangular cored fasteners fully seat with the apertured surface, whereas the circular cored fastener had a clearance of about 0.010 in. (0.25 mm). Additionally, since the fasteners of this invention are not damaged by high interference fit, they can accommodate greater production variances.

Moreover, it has been found that the square cored fasteners exhibit higher extraction strengths than the circular-cored fastener.

**Claims**

1. A molded plastic article (12) adapted to be attached by an integrally molded plastic fastener (10) to a cooperating part (32) having an aperture (42) for receiving said fastener (10),

said plastic article (12) having a first surface (18), an opposite second surface and a solid central portion;

said fastener (10) comprising an integral lug (14) extending from said first surface (18) outwardly and terminating in a distal end (20), the portion of said first surface (18, 46) which intersects said lug (14) defining a shoulder adapted to surround said aperture (42), the central portion of said lug (14) having an axial hollow core (24), said core (24) being surrounded by a solid wall portion, characterized by said hollow core (24) extending from a first end adjacent said distal end (20) to a second end (26) which is located interiorly of the first surface (18, 46) so as at least to extend into said solid central portion of said plastic article (12), the length $(L_2)$ of said core (24) being greater than the length $(L_1)$ of said lug (14); and

the outside lateral dimension $(D_1)$ of said lug (14) being substantially the same adjacent said first surface (18) and adjacent said distal end (20).

2. The article of claim 1 wherein said core (24) has a substantially circular cross-section at least adjacent said distal end (20) (Fig. 2).

3. The article of claim 1 wherein said core (24) has a substantially square cross-section at least adjacent said distal end (20) (Fig. 2A).

4. The article of claim 1 wherein said core (24) has a substantially triangular cross-section at least adjacent said distal end (20) (Fig. 2B).

5. The article of any of claims 2—4 wherein said lug (14) in cross-section has a substantially circular outside surface (22).

6. The article of claim 5 wherein said second end (26) of said core (24) terminates within said solid central portion of said plastic article (12).

7. The article of claim 6 wherein the diameter of said core (24) adjacent its first end (20) is greater than the diameter of said core (24) adjacent said second end (26).

8. The article of claim 7 wherein said integral lug (14) extends substantially at right angles from said first surface (18).

9. The article of claim 1 wherein said cooperating part comprises the frame (32) of a seat belt retractor (30) and said plastic article (12) comprises a cover (34) adapted to be attached to said frame (32).

10. The article of claim 9 wherein plurality of plastic fasteners (10) extend from said cover (34) and are adapted to be inserted into a plurality of apertures (42) in said frame (32).

**Revendications**

1. Produit (12) en matière plastique mouleé adapté pour être attaché par un élément de fixation (10) intégral en matière plastique moulée à une partie (32) coopérante ayant un orifice (42) pour recevoir ledit élément de fixation (10),

ledit produit (12) matière plastique ayant une première surface (18), une seconde surface opposée et une partie centrale solide;

ledit élément de fixation (10) comprenant une partie saillante (14) intégrale s'étendant, vers l'extérieur à partir de ladite première surface (18) jusqu'à une extrémité distale (20), la partie de ladite première surface (18, 46) qui coupe ladite partie saillante (14) définissant un épaulement adapté pour entourer ledit orifice (42), la partie centrale de ladite partie saillante (14) ayant un noyau (24) axial creux, ledit noyau (24) étant entouré par une paroi solide,

ledit produit (12) en matière plastique étant caractérisé en ce que:

ledit noyau (24) creux s'étendant à partir d'une première extrémité adjacente à ladite extrémité distale (20) jusqu'à une seconde extrémité (26) logée à l'intérieur de la première surface (18, 46), donc s'étendant au moins à l'intérieur de ladite partie centrale solide dudit produit (12) en matière plastique, la longueur $(L_2)$ dudit noyau (24) étant supérieure à la longueur $(L_1)$ de ladite partie saillante (14); et

la dimension latérale extérieure $(D_1)$ de ladite partie saillante (14) étant sensiblement égale à celle de ladite première surface adjacente (18) et à celle de ladite extrémité distale (20) adjacente.

2. Produit selon la revendication 1, caractérisé en ce que ledit noyau (24) présente une surface en coupe sensiblement circulaire au moins adjacente à ladite extrémité distale (20) (figure 2).

3. Produit selon la revendication 1, caractérisé en ce que ledit moyau (24) présente une surface en coupe sensiblement carrée au moins adjacente à ladite extrémité distale (20). (figure 2A).

4. Produit selon la revendication 1, caractérisé en ce que ledit noyau (24) présente une surface en coupe sensiblement triangulaire au moins adjacente à ladite extrémité distale (20), (figure 2B).

5. Produit selon l'une quelconque des revendications 2 à 4, caractérisé en ce que ladite partie saillante (14) présente, en coupe, une surface extérieure (22) sensiblement circulaire.

6. Produit selon la revendication 5, caractérisé en ce que ladite seconde extrémité (26) dudit noyau (24) aboutit à l'intérieur de ladite partie centrale solide dudit produit (12) en matière plastique.

7. Produit selon la revendication 6, caractérisé en ce que le diamètre dudit noyau (24) adjacent à ladite première extrémité (20) est supérieur au diamètre dudit moyau (24) adjacent à ladite seconde extrémité (26).

8. Produit selon la revendication 7, caractérisé en ce que ladite partie saillante (14) intégrale s'étend sensiblement à angle droit de ladite première surface (18).

9. Produit selon la revendication 1, caractérisé en ce que ladite partie coopérante comprend le corps (32) d'un enrouleur de ceinture de sécurité (30) et, ledit produit (12) en matière plastique comprend un couvercle (34) adapté pour être attaché audit corps (32).

10. Produit selon la revendication 9, caractérisé en ce qu'une pluralite d'éléments de fixation (10) en matière plastique s'étendent à partir dudit couvercle (34) et sont adaptés pour être insérés à l'intérieur d'une pluralité d'orifices (42) dans ledit corps (32).

**Patentansprüche**

1. Geformtes Kunstoffteil (12), welches durch ein einstükkig angeformtes Kunststoff-Befestigungselement (10) anbringbar ist an ein mit diesem zusammenwirkendes Teil (32) mit einer Öffnung (42) zur Aufnahme der Befestigungseinrichtung (10), wobei das Kunststoffteil (12) eine erste Oberfläche (18), eine gegenüberliegende zweite Oberfläche und ein festes Mittelteil hat, die Befestigungseinrichtung (10) eine einstückige Stütze (14) aufweist, die sich von der ersten Oberfläche (18) nach auswärts erstreckt und am äußeren Ende (20) endet, der Teil der ersten Oberfläche (18, 46), welcher die Stütze (14) schneidet, eine Schulter bildet, die geeignet derart ausgestaltet ist, daß sie die Öffnung (42) umgibt, und der Mittelteil der Stütze (14) einen axialen Hohlkern (24) hat, der von einem festen Wandteil umgeben ist, dadurch gekennzeichnet, daß sich der Hohlkern (24) von einem ersten Ende neben dem äußeren Ende (20) zu einem zweiten Ende (26) erstreckt, welches innerhalb der ersten Oberfläche (18, 46) derart angeordnet ist, daß es sich mindestens in das feste Mittelteil des Kunststoffteils (12) erstreckt, die Länge ($L_2$) des Kerns (24) größer ist als die Länge ($L_1$) der Stütze (14) und daß das äußere Quermaß ($D_1$) der Stütze (14) im wesentlichen neben der ersten Oberfläche (18) dasselbe ist wie neben dem äußeren Ende (20).

2. Teil nach Anspruch 1, wobei der Kern (24) im wesentlichen kreisförmigen Querschnitt mindestens neben dem äußeren Ende (20) hat (Fig. 2).

3. Teil nach Anspruch 1, wobei der Kern (24) im wesentlichen mindestens neben dem äußeren Ende (20) viereckigen Querschnitt hat (Fig. 2A).

4. Teil nach Anspruch 1, wobei der Kern (24) mindestens neben dem äußeren Ende (20) im wesentlichen dreieckigen Querschnitt hat (Fig. 2B).

5. Teil nach einem der Ansprüche 2 bis 4, wobei die Stütze (14) im Querschnitt eine im wesentlichen kreisförmige Außenoberfläche (22) hat.

6. Teil nach Anspruch 5, wobei das zweite Ende (26) des Kerns (24) innerhalb des festen Mittelteils des Kunststoffteils (12) endet.

7. Teil nach Anspruch 6, wobei der Durchmesser des Kerns (24) neben seinem ersten Ende (20) größer ist als der Durchmesser des Kerns (24) neben dem zweiten Ende (26).

8. Teil nach Anspruch 7, wobei die Innenstütze (14) sich im wesentlichen unter rechten Winkeln von der ersten Oberfläche (18) aus erstreckt.

9. Teil nach Anspruch 1, wobei das zusammenwirkende Teil den Rahmen (32) eines Sicherheitsgurtretraktors (30) aufweist und das Kunststoffteil (12) eine Abdeckung (34) aufweist, die an dem Rahmen (32) anbringbar ist.

10. Teil nach Anspruch 9, wobei eine Vielzahl von Kunststoff-Befestigungseinrichtungen (10) sich von der Abdeckung (34) erstreckt und in eine Vielzahl von Öffnungen (42) in dem Rahmen (32) einführbar ist.

5

0 058 309

FIG. 1

FIG. 2 A

FIG. 2 B

FIG. 2

FIG. 3

FIG. 4

FIG. 5